# EUROPÄISCHE PATENTSCHRIFT

(11) **EP 3 476 030 B1**
(45) Veröffentlichungstag und Bekanntmachung des Hinweises auf die Patenterteilung: **19.08.2020**
(21) Anmeldenummer: 17732812.7
(22) Anmeldetag: 12.06.2017
(51) Int. Cl.: B64D 27/24, H02K 55/02, H01M 8/04007, B64D 41/00, H02K 9/10, H02K 9/20

(54) **SYSTEM MIT EINER ELEKTRISCHEN MASCHINE MIT KRYOGENER KOMPONENTE UND VERFAHREN ZUM BETREIBEN DES SYSTEMS**
SYSTEM HAVING AN ELECTRIC MACHINE WITH A CRYOGENIC COMPONENT, AND METHOD FOR OPERATING THE SYSTEM
SYSTÈME ÉQUIPÉ D'UNE MACHINE ÉLECTRIQUE AYANT DES COMPOSANTS CRYOGÈNES ET PROCÉDÉ DE FONCTIONNEMENT DU SYSTÈME

(30) Priorität: 29.07.2016 DE 102016213993
(43) Veröffentlichungstag der Anmeldung: 01.05.2019
(73) Patentinhaber: Rolls-Royce Deutschland Ltd & Co KG, 15827 Blankenfelde-Mahlow (DE)
(72) Erfinder: FRANK, Michael, 91080 Uttenreuth (DE); GRUNDMANN, Jörn, 91091 Grossenseebach (DE); VAN HASSELT, Peter, 91058 Erlangen (DE)
(86) Internationale Anmeldenummer: PCT/EP2017/064219
(87) Internationale Veröffentlichungsnummer: WO 2018/019461

(56) Entgegenhaltungen:
- JP-A- 2004 104 925
- JP-A- 2005 354 809
- JP-A- 2006 136 071
- KR-B1- 101 154 599

## Beschreibung

Die Erfindung betrifft eine elektrische Maschine mit einer supraleitfähigen Komponente, welche mit Hilfe einer kryogenen Flüssigkeit gekühlt wird. Insbesondere betrifft die Erfindung die weitestgehend vollständige Nutzung der aus einer Verdampfung der kryogenen Flüssigkeit und der anschließenden Aufwärmung des verdampften Mediums verfügbaren Kälteleistung.

Der Betrieb von Maschinen mit kryogenen Komponenten, d.h. Komponenten, die bei kryogenen Umgebungstemperaturen betrieben werden, erfordert in der Regel einen nicht unerheblichen Aufwand zur Bereitstellung der Kühlleistung, die benötigt wird, um die Temperatur der Komponenten auf ein kryogenes Niveau zu senken. Potential zur Verminderung des Aufwands besteht, wenn die Maschine in einer Umgebung bzw. in einem System betrieben wird, wo Betriebsmittel zur Verfügung stehen, die genutzt werden können, um die erforderliche Kühlleistung aufzubringen. Derartige Betriebsmittel können bspw. Wasserstoff und/oder Sauerstoff sein, die bspw. an Bord eines Unterseebootes oder eines Luftfahrzeugs zum Betrieb von Verbrauchern wie etwa Verbrennungsturbinen oder Brennstoffzellen eingesetzt werden und die zur Volumeneinsparung in Form von kryogenen Flüssigkeiten mitgeführt werden, welche bei sehr niedrigen Temperaturen vorliegen. Bspw. liegen die Siedepunkte von Wasserstoff bzw. Sauerstoff bei ca. 20K bzw. 90K.

Da die Betriebsmittel von den Verbrauchern jedoch typischerweise bei Temperaturen in der Größenordnung der Raumtemperatur benötigt werden, müssen sie vor der Verwendung zunächst verdampft und aufgewärmt werden. Dies erfolgt bspw. mit Hilfe elektrischer Heizungen, was sich jedoch aufgrund des Energieverbrauchs der Heizung negativ auf den Gesamtwirkungsgrad des Systems auswirkt.

JP2004104925 A offenbart ein System, wobei das Kühlmittel der elektrischen Maschine des Systems als Betriebsmittel einer Brennstoffzelle des Systems zur Verfügung gestellt wird. Es ist daher eine Aufgabe der Erfindung, den Gesamtwirkungsgrad eines derartigen Systems zu verbessern.

Diese Aufgabe wird durch das in Anspruch 1 beschriebene Verfahren sowie durch das in Anspruch 4 beschriebene System gelöst. Die Unteransprüche beschreiben vorteilhafte Ausgestaltungen.

Bei einem Verfahren zum Betreiben eines Systems, welches eine kryogene, insbesondere supraleitfähige, elektrische Maschine mit einer Vielzahl von Komponenten aufweist, umfassend zumindest eine kryogene Komponente und zumindest eine weitere Komponente sowie einen Verbraucher, welcher ausgebildet ist, um ein Betriebsmittel umzusetzen, wird ein kryogenes Kühlmittel aus einem Reservoir in flüssigem Zustand der kryogenen Komponente der elektrischen Maschine zugeführt wird, um die kryogene Komponente auf eine kryogene Temperatur zu kühlen. Die kryogene Komponente wird bei der kryogenen Temperatur supraleitend bzw. weist eine Leitfähigkeit auf, die gegenüber seiner Leitfähigkeit bei 0°C um zumindest eine Größenordnung erhöht ist. Beim Kühlen der kryogenen Komponente verdampft das Kühlmittel zumindest teilweise. Das Kühlmittel wird anschließend gänzlich oder zumindest überwiegend in gasförmigem Zustand der weiteren Komponente der elektrischen Maschine zugeführt wird, um die weitere Komponente unter Ausnutzung einer nach der Kühlung der kryogenen Komponente verbleibenden Kühlleistung des Kühlmittels abzukühlen. Anschließend, d.h. nach Durchlaufen der elektrischen Maschine, wird das Kühlmittel von der elektrischen Maschine dem Verbraucher zur Verfügung gestellt wird, wobei der Verbraucher das ihm zugeführte Kühlmittel als Betriebsmittel verwendet und umsetzt.

Das Kühlen der kryogenen Komponente erfolgt unter Ausnutzung zumindest eines Teils der Verdampfungsenthalpie des flüssigen Kühlmittels. Das Abkühlen der weiteren Komponente kann ggf. unter Ausnutzung eines nach dem Kühlen der kryogenen Komponente verbleibenden Teils der Verdampfungsenthalpie erfolgen, oder unter Ausnutzung zumindest eines Teils der Aufwärmenthalpie des Kühlmittels.

Das der Erfindung zu Grunde liegende Konzept basiert darauf, dass in dem System eine elektrische Maschine mit zumindest einer kryogenen bzw. supraleitenden Komponente betrieben wird. Diese Komponente kann bspw. ein Trafo, ein Strombegrenzer, ein Motor oder ein Generator sein. In dieser Konstellation des Systems ist die Verdampfungsenthalpie des zur Kühlung der kryogenen Komponente verwendeten kryogenen flüssigen Kühlmittels benutzt, um die Komponente auf zumindest annähernd konstanter Betriebstemperatur zu halten. Zusätzlich wird nun ausgenutzt, dass in der Aufwärmenthalpie des verdampften Kühlmittels noch ein erhebliches Kühlpotential enthalten ist. Zwar fällt die entsprechende Kühlleistung, anders als diejenige der Verdampfungsenthalpie, nicht auf konstanter Temperatur an, sondern über den kompletten Bereich zwischen der Siedetemperatur des Kühlmittels und der späteren Einsatztemperatur beim Verbraucher. Eine Nutzung der Aufwärmenthalpie zur Kühlung der kryogenen Komponente, die auf einer konstanten, tiefen Temperatur betrieben wird, ist daher nur bedingt effizient. Jedoch : ist die Aufwärmenthalphie zur Kühlung der weiteren Komponente der Maschine verwendet. Zusätzlich kann ggf. auch ein nach der Kühlung der kryogenen Komponente evtl. verbleibender Teil der Verdampfungsenthalpie des Kühlmittels zur Kühlung der weiteren Komponente eingesetzt werden.

Dabei geht das Abkühlen der weiteren Komponente so weit, dass nicht nur eine Aufwärmung der weiteren Komponente aufgrund derjenigen Verluste, die beim regulären Betrieb der weiteren Komponente entstehen, kompensiert bzw. die entsprechende Wärme abgeführt wird, sondern die weitere Komponente wird auf eine Betriebstemperatur bei einem Temperaturniveau herabgekühlt, welches unterhalb der Normaltemperatur liegt. Unter der Normaltemperatur wird dabei diejenige Temperatur verstanden, die die weitere Komponente hätte, wenn das System bzw. die elektrische Maschine nicht im Betrieb ist, d.h. die Normaltemperatur ist bspw. die Umgebungs- bzw. Raumtemperatur des Umfelds, in dem sich die elektrische Maschine befindet. Umgekehrt kann zur Definition der Normaltemperatur davon ausgegangen werden, dass die weitere Komponente, sobald die elektrische Maschine betrieben wird, eine Temperatur aufweist, die über der Normaltemperatur liegt, sofern sie nicht wie oben/unten beschrieben abgekühlt wird.

Es wird demnach die Aufwärmenthalphie sowie ggf. ein verbleibender Teil der Verdampfungsenthalpie zur Kühlung der weiteren Komponente genutzt. Dabei sollen jedoch nicht nur die betriebsbedingten Verluste der weiteren Komponente abgeführt werden, sondern es soll der Effekt genutzt werden, dass der elektrische Widerstand der weiteren Komponente mit sinkender Temperatur abnimmt und damit bspw. die I²·R-Verluste ebenfalls. Dabei kann davon ausgegangen werden, dass durch das Kühlmittel nicht nur die betriebsbedingten Verluste abgeführt werden, sondern zusätzlich auch noch eine Kühlung der weiteren Komponente auf ein tieferes Temperaturniveau erfolgt, so dass die Höhe der betriebsbedingten Verluste reduziert wird, was wiederum die Kühlung erleichtert.

Das Kühlmittel wird erst dann aus der elektrischen Maschine abgeführt, wenn eine Temperatur des Kühlmittels einen ersten vorgegebenen Mindestwert überschritten hat und/oder erst dann dem Verbraucher zugeführt, wenn eine Temperatur des Kühlmittels einen zweiten vorgegebenen Mindestwert überschritten hat.

Erster und zweiter Mindestwert können zwar identisch sein, typischerweise wird aber der erste Mindestwert derart vorgegeben sein, dass das Kühlmittel abgeführt wird, sobald seine Temperatur so hoch und damit seine Kühlwirkung so gering ist, dass ein weiteres Abkühlen der weiteren Komponente nicht mehr gewährleistet ist. Der zweite Mindestwert wird idealerweise so hoch liegen, dass die Temperatur des Kühlmittels bzw. des Betriebsmittels für den Verbraucher im für den Betrieb des Verbrauchers optimalen Bereich liegt.

Vorteilhafterweise wird dem Verbraucher zusätzlich Betriebsmittel zugeführt, wenn das dem Verbraucher nach dem bislang beschriebenen Verfahren zur Verfügung gestellte Betriebsmittel nicht den momentanen Bedarf des Verbrauchers an Betriebsmittel decken kann. Zur Bereitstellung des zusätzlichen Betriebsmittels wird dem Reservoir zusätzliches Kühlmittel entnommen. Das entnommene zusätzliche Kühlmittel wird einem Bypass zugeführt, welcher eine Umgehung der kryogenen Komponente darstellt, d.h. das dem Bypass zugeführte Kühlmittel wird nicht der kryogenen Komponente zugeführt. Der Bypass weist eine Heizeinrichtung auf, der das entnommene zusätzliche Kühlmittel zugeführt wird und die das ihr zugeführte Kühlmittel auf eine für die spätere Verwendung im Verbraucher geeignete Temperatur aufwärmt. Das aufgewärmte Kühlmittel wird schließlich als zusätzliches Betriebsmittel dem Verbraucher zur Verfügung gestellt. Es ist also möglich, dem Verbraucher über den Bypass zusätzliches Betriebsmittel zuzuführen, bspw. wenn der Verbraucher einen erhöhten Bedarf aufweist.

Auch kann überschüssiges, d.h. momentan im Verbraucher nicht benötigtes bzw. nicht umsetzbares, in der kryogenen Komponente verdampftes Kühlmittel einem Speicher zugeführt und dort zwischengespeichert werden. Zumindest für den Fall, dass ein Bedarf des Verbrauchers an Betriebsmittel eine von der elektrischen Maschine zur Verfügung gestellte Menge an Betriebsmittel übersteigt, wird zumindest ein Teil des in dem Speicher zwischengespeicherten Kühlmittels als zusätzliches Betriebsmittel dem Verbraucher zugeführt wird. Dabei entspricht die zur Verfügung gestellte Menge im Wesentlichen der von der kryogenen Komponente momentan bereitgestellten Menge an

Vorteilhafterweise erfolgt das Abkühlen der weiteren Komponente vor einer Inbetriebnahme der elektrischen Maschine. Diese Betriebsmodus ist bspw. und insbesondere für den Fall der Anwendung des Systems in einem Luftfahrzeug mit elektrischem Antriebssystem vorteilhaft, weil hiermit unmittelbar vor dem Start des elektrischen Flugzeugs die weitere Komponente, bspw. eine Statorwicklung der elektrischen Maschine, möglichst kalt ist, so dass kurzzeitig eine Überlastung der elektrischen Maschine bspw. für den Start des Flugzeugs ermöglicht wird. In diesem Beispiel geht die Inbetriebnahme der elektrischen Maschine einher mit der Aktivierung des Antriebssystems des Flugzeugs zur Schuberzeugung.

Ein entsprechendes System weist eine kryogene, insbesondere supraleitfähige, elektrische Maschine mit einer Vielzahl von Komponenten und mit einem Leitungssystem zum Leiten eines Kühlmittels zu den und zwischen den Komponenten auf, sowie einen Verbraucher, welcher ausgebildet ist, um ein Betriebsmittel umzusetzen, bspw. zur Bereitstellung von elektrischer oder mechanischer Energie. Die Vielzahl von Komponenten umfasst zumindest eine kryogene Komponente und ein der kryogenen Komponente zugeordnetes erstes Kühlsystem sowie zumindest eine weitere Komponente und ein der weiteren Komponente zugeordnetes zweites Kühlsystem. Dem ersten Kühlsystem ist das Kühlmittel von einem Reservoir in flüssigem Zustand über einen ersten Abschnitt des Leitungssystems zuführbar ist, um die kryogene Komponente unter Ausnutzung zumindest eines Teils der Verdampfungsenthalpie des flüssigen Kühlmittels auf eine kryogene Temperatur zu kühlen, wobei die kryogene Komponente bei der kryogenen Temperatur supraleitend wird bzw. eine Leitfähigkeit aufweist, die gegenüber seiner Leitfähigkeit bei 0°C um zumindest eine Größenordnung erhöht ist. Dem zweiten Kühlsystem ist das Kühlmittel von der kryogenen Komponente bzw. vom ersten Kühlsystem über einen weiteren Abschnitt des Leitungssystems zuführbar, um die weitere Komponente unter Ausnutzung einer nach der Kühlung der kryogenen Komponente verbleibenden Kühlleistung des Kühlmittels und unter Ausnutzung zumindest eines Teils der Aufwärmenthalpie des Kühlmittels auf eine gegenüber einer Normaltemperatur verminderte Betriebstemperatur abzukühlen. Das Betriebsmittel des Verbrauchers ist dabei das Kühlmittel und der Verbraucher und die elektrische Maschine sind derart fluidisch miteinander verbunden, dass das Kühlmittel nach Durchlaufen der elektrischen Maschine dem Verbraucher im gasförmigen Zustand zuführbar ist, um dort umgesetzt zu werden.

Die kryogene Komponente ist vorzugsweise ein Rotor der elektrischen Maschine, insbesondere eine kryogene Rotorwicklung des Rotors oder ein am Rotor angeordneter supraleitender Permanentmagnet.

Zur Kühlung des Rotors kann dieser in oder an einem das flüssige Kühlmittel aufweisenden Bad angeordnet sein.

Die weitere Komponente des Systems ist vorzugsweise eine normalleitende Komponente, bspw. ein Stator der elektrischen Maschine ist, insbesondere eine Statorwicklung.

Der Verbraucher kann eine Brennstoffzelle sein, in der das Betriebsmittel zur Bereitstellung elektrischer Energie umgesetzt wird, oder ein Verbrennungsmotor, in dem das Betriebsmittel zur Bereitstellung kinetischer Energie umgesetzt wird.

Das System weist ein Reservoir zum Speichern und Bereitstellen des Kühlmittels in flüssigem Zustand auf, wobei das Reservoir derart fluidisch oder thermisch mit der elektrischen Maschine verbunden ist, dass das Kühlmittel dem ersten Abschnitt des Leitungssystems und darüber dem ersten Kühlsystem und der kryogenen Komponente zuführbar ist.

Zusätzlich ist ein Bypass vorgesehen, der das Reservoir und den Verbraucher unter Umgehung der kryogenen Komponente und des ersten Kühlsystems fluidisch miteinander verbindet, so dass ein dem Bypass aus dem Reservoir zugeführtes Kühlmittel dem Verbraucher über den Bypass direkt oder indirekt als zusätzliches Betriebsmittel zugeführt werden kann, ohne dass das Kühlmittel im Bypass auf dem Weg zum Verbraucher der kryogenen Komponente zugeführt wird. Dabei meint "direkt oder indirekt", dass der Bypass zum Einen direkt und ohne zwischengeschaltete wesentliche weitere Komponenten mit dem Verbraucher verbunden sein kann. Zum Anderen kann im Fall der indirekten Verbindung das Kühlmittel nach Durchlaufen des Bypasses und vor Erreichen des Verbrauchers andere Komponenten durchlaufen, bspw. das zweite Kühlsystem. In keinem Fall wird jedoch das den Bypass durchlaufende Kühlmittel das erste Kühlsystem durchlaufen. Der Bypass weist eine Heizeinrichtung auf, mit der das dem Bypass zugeführte Kühlmittel aufwärmbar ist, bevor es dem Verbraucher zugeführt wird. Mit dieser Einrichtung kann sichergestellt werden, dass dem Verbraucher stets eine ausreichende Menge von Betriebsmittel zugeführt werden kann, wobei das Betriebsmittel darüber hinaus eine geeignete Temperatur aufweist.

In einer Variante verbindet der Bypass das Reservoir und den Verbraucher fluidisch auch unter Umgehung der weiteren Komponente und des zweiten Kühlsystems. Zumindest in dieser Variante weist die Heizeinrichtung bspw. eine elektrische Heizung auf.

In einer alternativen Variante verbindet der Bypass das Reservoir und das zweite Kühlsystem zum Kühlen der weiteren Komponente fluidisch miteinander, so dass das dem Bypass zugeführte Kühlmittel nach Durchlaufen des Bypasses dem zweiten Kühlsystem und der weiteren Komponente und anschließend dem Verbraucher als zusätzliches Betriebsmittel zuführbar ist. In dieser Variante kann die Heizeinrichtung eine separate Einrichtung zum Aufwärmen des Kühlmittels sein, bspw. eine elektrische Heizung, oder aber das zweite Kühlsystem stellt die Heizeinrichtung dar, so dass eine separate Vorrichtung zum Aufwärmen des Kühlmittels bevor es dem Verbraucher zugeführt wird, verzichtet werden kann.

Das System kann einen Speicher aufweisen, dem zumindest überschüssiges, d.h. momentan im Verbraucher nicht benötigtes bzw. nicht umsetzbares, in der kryogenen Komponente verdampftes Kühlmittel zuführbar und dort zwischenspeicherbar sein kann. Dieser Speicher stellt alternativ oder zusätzlich zum oben beschriebenen Bypass eine Möglichkeit dar, den Verbraucher stets mit einer ausreichenden Menge an Betriebsmittel zu versorgen.

Hierbei und im Folgenden meint der Begriff kryogene elektrische Maschine, dass zumindest eine Komponente der Maschine, bspw. ein Permanentmagnet oder eine Rotor- oder Statorwicklung der Maschine, kryogen gekühlt ist und sich dementsprechend auf einer kryogenen, d.h. auf einer extrem niedrigen Temperatur befindet, bei der die Leitfähigkeit gegenüber derjenigen bei Raumtemperatur signifikant verbessert ist. In analoger Weise ist auch bspw. der Begriff kryogene Komponente so zu verstehen, dass diese Komponente kryogen gekühlt ist.

Bspw. ist es denkbar, die kryogene Komponente aus Kupfer oder Aluminium herzustellen und sie auf eine Temperatur von 21K zu kühlen. Diese Metalle sind bei dieser Temperatur zwar noch nicht superleitend, aber ihr Widerstand sinkt um bis zu drei Größenordnungen gegenüber dem Widerstand bei Raumtemperatur, was sich bereits als enormer Vorteil darstellt.

Das kryogene Kühlen geht im Fall der kryogenen Komponente der elektrischen Maschine im Idealfall so weit, dass die gekühlte Komponente in einen supraleitenden Zustand übergeht. Hierzu besteht diese Komponente aus einem Material, das bei Unterschreiten der für dieses Material typischen Sprungtemperatur in den supraleitenden Zustand übergeht. Dementsprechend meint der Begriff supraleitende elektrische Maschine, dass zumindest ein Bauteil des Generators, bspw. wieder die Magnetspule, supraleitend ist bzw. aus einem Material besteht, das bei Unterschreiten der für dieses Material typischen Sprungtemperatur in den supraleitenden Zustand übergeht. In analoger Weise ist auch bspw. der Begriff supraleitende Komponente so zu verstehen, dass diese Komponente aus einem Material besteht, das bei Unterschreiten der für dieses Material typischen Sprungtemperatur in den supraleitenden Zustand übergeht.

Im Folgenden werden die Erfindung und beispielhafte Ausführungsformen anhand von Zeichnungen näher erläutert. Dabei zeigt
FIG 1 ein Beispiel eines Systems mit einer elektrischen Maschine und einem Verbraucher,
FIG 2 eine erste Variante einer ersten Ausführungsform des Systems,
FIG 3 eine zweite Variante der ersten Ausführungsform des Systems,
FIG 4 eine dritte Variante der ersten Ausführungsform des Systems,
FIG 5 eine zweite Ausführungsform des Systems.

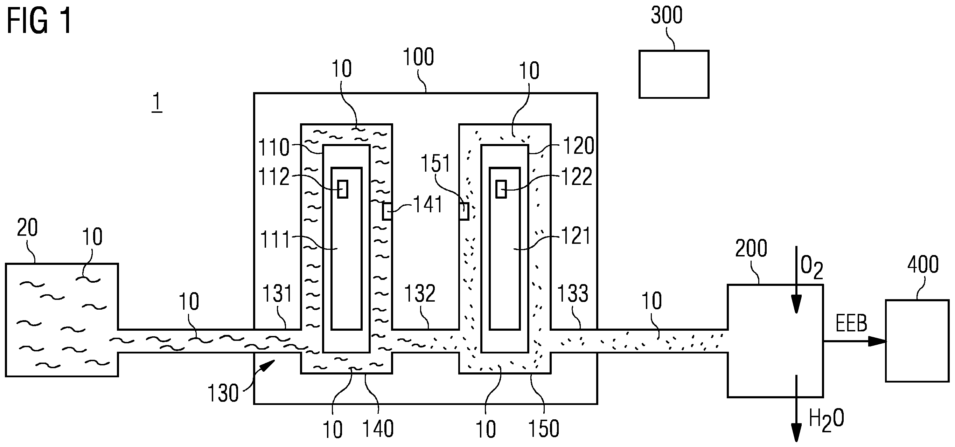

Die FIG 1 zeigt in rein schematischer Ansicht Beispiel Systems 1 mit einer kryogenen elektrischen Maschine 100 mit einem Rotor 110 und einem Stator 120. Das System 1 kann bspw. in einem Fahrzeug wie etwa einem Unterseeboot oder einem elektrisch angetriebenen Flugzeug installiert sein. Im Betriebszustand der elektrischen Maschine 100 rotiert der Rotor 110 mit magnetischen Mitteln 111 gegenüber dem Stator 120, welcher ein Statorwicklungssystem 121 aufweist. Rotor 110 und Stator 120 sind so zueinander angeordnet, dass die magnetischen Mittel 111 und das Statorwicklungssystem 121 derart in elektromagnetische Wechselwirkung miteinander treten, dass die elektrische Maschine 100 aufgrund der Wechselwirkung in einem ersten Betriebsmodus als Generator und/oder in einem zweiten Betriebsmodus als Elektromotor arbeitet. Die Arbeitsweise der elektrischen Maschine 100 basiert also auf dem an sich bekannten Konzept, dass Rotor 110 und Stator 120 elektromagnetisch miteinander wechselwirken, so dass die elektrische Maschine 100 in einem der beiden Betriebsmodi arbeiten kann.

Exemplarisch wird im Folgenden davon ausgegangen, dass die magnetischen Mittel 111 durch Permanentmagnete realisiert sind, welche ein Magnetfeld erzeugen, das in die oben erwähnte elektromagnetische Wechselwirkung zwischen Rotor 110 und Stator 120 eingeht, welche letztlich den Betrieb der elektrischen Maschine 100 als Elektromotor bzw. als Generator begründet. Der Vollständigkeit halber sei erwähnt, dass die magnetischen Mittel 111 bspw. auch als Rotorwicklungssystem realisiert sein können. Derartige Ausführungen sind jedoch an sich bekannt, werden daher im Folgenden nicht mehr weiter erläutert.

Arbeitet die elektrische Maschine 100 als Generator, so werden der Rotor 110 und mit ihm die magnetischen Mittel 111 bspw. über eine Welle (nicht dargestellt) der elektrischen Maschine 100 in Rotation versetzt, so dass im Statorwicklungssystem 121 eine elektrische Spannung induziert wird, welche zu einer weiteren Verwendung abgegriffen werden kann. Soll die elektrische Maschine 100 als Elektromotor arbeiten, so wird das Statorwicklungssystem 121 mit elektrischem Strom beaufschlagt, so dass aufgrund der Wechselwirkung der hiermit erzeugten Magnetfelder mit den Feldern der magnetischen Mittel 111 ein Drehmoment auf den Rotor 110 und damit auf die Welle wirkt. Auch diese Wirkungsweise ist an sich bekannt, wird daher nicht weiter erläutert.

Die magnetischen Mittel 111 des Rotors 110 bzw. die Permanentmagnete 111 stellen im in Fig. 1 dargestellten Beispiel erste, kryogene Komponente der elektrischen Maschine 100 dar. Die Permanentmagnete 111 sind dabei insbesondere supraleitfähige bzw. -bei entsprechender Temperatur- supraleitende Permanentmagnete. Das Statorwicklungssystem 121 stellt eine weitere Komponente der elektrischen Maschine 100 dar, wobei die weitere Komponente 121 im Unterschied zur ersten, kryogenen Komponente 111 nicht notwendigerweise kryogene Eigenschaften aufweisen muss.

Während also die Ausführung der ersten Komponente 111 als kryogene Komponente gewährleistet, dass sie bei entsprechender Umgebungstemperatur supraleitende Eigenschaften aufweist, ist bei der weiteren Komponente 121 lediglich davon auszugehen, dass sie zwar nicht in den supraleitenden Zustand übergeht, dass sich aber ihr elektrischer Widerstand bei entsprechend geringen Temperaturen um einen Faktor in einer Größenordnung von bspw. 10-100 vermindert. Vorteilhafterweise müssen zur Erzielung dieses Effekts die Temperaturen nicht so niedrig sein, wie für die supraleitende Komponente 111.

Das System 1 weist neben der elektrischen Maschine 100 einen Verbraucher 200 auf, dem ein Betriebsmittel 10 zugeführt wird. Der Verbraucher 200 kann bspw. ein Verbrennungsmotor bzw. eine Turbine sein, wobei das Umsetzen des Betriebsmittels in der Turbine 200 darin besteht, dass es mit dem Ziel der Bereitstellung von kinetischer Energie verbrannt wird. Alternativ kann der Verbraucher 200 eine Brennstoffzelle sein, in der das Betriebsmittel 10 zur Bereitstellung von elektrischer Energie in bekannter Weise umgesetzt wird. Der Verbraucher 200 kann ggf. sowohl eine Brennstoffzelle als auch einen Verbrennungsmotor umfassen und das Betriebsmittel 10 wird dementsprechend je nach Bedarf aufgeteilt bzw. zum Motor und/oder zur Brennstoffzelle geleitet, um dort umgesetzt zu werden.

Im Folgenden wird davon ausgegangen, dass der Verbraucher 200 eine Wasserstoff-Sauerstoff-Brennstoffzelle und das Betriebsmittel 10 Wasserstoff ist. In an sich bekannter Weise wird in der Brennstoffzelle 200 das Betriebsmittel 10 bzw. der Wasserstoff 10 mit Sauerstoff O2 in Kontakt gebracht, der bspw. der Umgebung entnommen werden kann. Wasserstoff 10 und der Reaktionspartner Sauerstoff 02 gehen eine chemische Reaktion ein, aus der elektrische Energie EEB sowie ein Reaktionsprodukt H2O hervorgehen. Die elektrische Energie EEB kann elektrischen Einrichtungen 400 des Systems 1 oder des Fahrzeugs, in dem das System 1 installiert ist, zugeführt werden. Eine solche elektrische Einrichtung 400 kann bspw. die elektrische Maschine 100 sein, insbesondere wenn diese als Elektromotor arbeitet. Auch ist es denkbar, dass die elektrische Einrichtung 400 eine Batterie ist, wo die elektrische Energie EEB für eine spätere Nutzung gespeichert werden kann. Ebenso kann die elektrische Einrichtung 400 diverse andere elektrische Verbraucher des Systems 1 bzw. des Fahrzeugs umfassen. Als weiteres Produkt der Brennstoffzelle 200 bzw. als Reaktionsprodukt fällt de-ionisiertes Wasser H2O an, welches ebenfalls zur weiteren Nutzung im System 1 bzw. im Fahrzeug Verwendung finden kann, bspw. als Mittel zur Kühlung oder als Brauch- oder Nutzwasser.

Das Betriebsmittel 10 wird in flüssiger Form und bei der entsprechend notwendigen niedrigen Temperatur in einem Reservoir 20 des Systems 1 aufbewahrt. Der flüssige Zustand des Mediums 10 wird in der FIG durch Wellenlinien symbolisiert. Wie einleitend erläutert, muss das Betriebsmittel 10, bevor es im Verbraucher 200 umgesetzt wird, auf eine zu diesem Zweck geeignete Temperatur gebracht bzw. erwärmt werden. Um dies zu erreichen, wird das Betriebsmittel 10 aus dem Reservoir 20 zunächst in der flüssigen Form der elektrischen Maschine 100 und dort über ein geeignetes Leitungssystem 130 mit mehreren Abschnitten 131, 132, 133 insbesondere zunächst der ersten, kryogenen Komponente 111 zugeführt, wo es aufgrund seiner Temperatur als flüssiges Kühlmittel Verwendung findet. Dies resultiert in einer entsprechenden Kühlung der ersten Komponente 111 auf eine Temperatur, bei der die erste Komponente 111 in den supraleitenden Zustand übergeht. Als geeignete Materialien kommen bspw. in Frage in einer ersten Generation (Bi,Pb)2Sr2Ca2Cu30x mit einer Sprungtemperatur von Tc=110K, in einer zweiten Generation YBCO (Yttrium-Barium-Kupferoxid) mit einer Sprungtemperatur von ca. Tc=92K oder auch weiter gefasst REBCO (RE = Rare Earth, also generell Seltenerdmaterial, bspw. Gd, in Verbindung mit Barium-Kupferoxid), wobei REBCO-Materialien eine ähnliche Sprungtemperatur Tc aufweisen wie YBCO. Handelsübliche HTS-Bandleiter der ersten und zweiten Generation sind bei der Temperatur des siedenden Wasserstoffs (bei "normalen" Magnetfeldern) supraleitend. Dabei wird die Verdampfungsenthalpie des Kühlmittels 10 benutzt, wobei die Kühlleistung vorteilhafterweise definitionsgemäß isotherm, also bei konstanter Temperatur, zur Verfügung steht. Somit ist gewährleistet, dass stets eine konstant niedrige Temperatur vorherrscht, so dass sich die supraleitfähige erste Komponente 111 im supraleitenden Zustand befindet. Dabei wird natürlich vorausgesetzt, dass das flüssige Betriebs- bzw. Kühlmittel 10 bei einer entsprechend niedrigen Temperatur vorliegt. Diese Temperatur ergibt sich aus der Siedetemperatur der jeweiligen kryogenen Flüssigkeit bei dem herrschenden Druck.

Die Kühlung der ersten Komponente 111 bzw. des Rotors 110 mit Permanentmagneten 111 erfolgt mit einem ersten Kühlsystem 140 der elektrischen Maschine 100. Das erste Kühlsystem 140 kann bspw. ein Kühlmittelbad sein. Das Kühlmittel 10 gelangt über den Abschnitt 131 des Leitungssystems 130 in das Kühlmittelbad 140 und das Bad 140 ist derart angeordnet und dimensioniert, dass sich der Rotor 110 und insbesondere die Permanentmagnete 111 bzw. die kryogene erste Komponente 111 zumindest teilweise im flüssigen Kühlmittel 10 befinden. Spätestens bei rotierendem Rotor 110 gelangt jeder Bereich der kryogenen ersten Komponente 111 zumindest zeitweise und wiederholt in das Kühlmittel 10 im Bad 140, so dass die kryogene Komponente derart temperiert werden kann, dass sie in den supraleitenden Zustand übergeht bzw. diesen aufrecht erhält. Zur Kühlung wird hierbei die Verdampfungsenthalpie des kryogenen Mediums genutzt.

Bei der Kühlung der ersten Komponente 111 kommt es zu einer Verdampfung des Kühlmittels 10 im Bad 140, so dass dieses schließlich gänzlich oder zumindest überwiegend in gasförmigem Zustand vorliegt. Der gasförmige Zustand des Mittels 10 wird in der FIG durch Punkte symbolisiert. Bspw. für den Fall, dass Wasserstoff als Betriebs- bzw. Kühlmittel 10 verwendet wird, kann angenommen werden, dass der Wasserstoff 10 in der Gasphase unmittelbar nach der Verdampfung bei einer druckabhängigen Temperatur vorliegt, bspw. bei ca. 25K, womit er offenbar noch ein erhebliches Kühlpotential bspw. für die weitere Komponente 121 der elektrischen Maschine 100 aufweist. Entsprechendes gilt für andere kryogene Kühlmittel, auch wenn deren Siedepunkte in der Regel von demjenigen des Wasserstoff abweichen und teilweise höher liegen. Nichtsdestotrotz sind die Temperaturen derartiger Kühlmittel nach dem Verdampfen noch derart niedrig, dass in der Aufwärmenthalpie ein nennenswertes Kühlpotential besteht.

Das nunmehr gänzlich oder zumindest überwiegend in gasförmigem Zustand vorliegende Kühlmittel 10 wird über einen weiteren Abschnitt 132 des Leitungssystems 130 zu einem zweiten Kühlsystem 150 der elektrischen Maschine 100 geleitet, welches vorgesehen ist, um die weitere Komponente 121 bzw. das Statorwicklungssystem 121 der elektrischen Maschine 100 abzukühlen, wobei zumindest ein Teil der nach dem Kühlen der ersten Komponente 111 verbleibenden Kühlleistung des Kühlmittels 10 ausgenutzt wird.

Während wie bereits erwähnt die Kühlung der ersten, kryogenen Komponente 111 auf der Nutzung der Verdampfungsenthalpie des flüssigen Kühlmittels 10 oder zumindest eines Teils davon basierte, basiert das Abkühlen der weiteren Komponente 121 auf der Ausnutzung zumindest eines Teils der Aufwärmenthalpie des Kühlmittels 10. Es kann zum Abkühlen der weiteren Komponente 121 jedoch ggf. auch noch ein nach dem Kühlen der ersten, kryogenen Komponente 111 verbleibender Rest der Verdampfungsenthalpie verwendet werden, wenn nicht die komplette zur Verfügung stehende Menge an kryogenem Kühlmittel 10 schon bei der Kühlung des Rotors verdampft wurde.

Das Kühl- bzw. Abkühlkonzept basiert also darauf, dass zum Einen zur Kühlung der kryogenen Komponente 111 die Verdampfungsenthalpie des Kühlmittels 10 verwendet wird, um die Komponente 111 auf weitestgehend konstanter Betriebstemperatur zu halten und somit den supraleitenden Zustand aufrecht zu erhalten, und dass zum Anderen zusätzlich ausgenutzt wird, dass in der Aufwärmenthalpie des verdampften Kühlmittels 10 noch ein erhebliches Kühlpotential enthalten ist, welches zum Abkühlen der weiteren Komponente 121 ausgenutzt wird.

Zum Abkühlen der weiteren Komponente 121, d.h. zur Realisierung des zweiten Kühlsystems 150, stehen mehrere Möglichkeiten zur Verfügung. Bspw. kann man das kalte Gas 10 direkt an der zu kühlenden, weiteren Komponente 121 entlang strömen lassen oder das zweite Kühlsystem 150 kann einen Wärmetauscher (nicht dargestellt) mit einem weiteren Kühlkreislauf aufweisen, der mit einem weiteren fluidischen Kühlmittel arbeitet, welches letztlich thermisch mit der weiteren Komponente 121 wechselwirkt. Alternativ kann das zweite Kühlsystem 150 Komponenten aus thermisch gut leitenden Materialien aufweisen, die auf einer Seite in thermischem Kontakt mit dem kalten Gas 10 und auf der anderen Seite direkt mit der zu kühlenden Komponente 121 verbunden sind, so dass die weitere Komponente 121 über Wärmeleitung thermisch gekoppelt und so abkühlbar sind.

Im Rahmen des Abkühlens der weiteren Komponente 121 wird diese auf eine gegenüber einer Normaltemperatur verminderte Betriebstemperatur abgekühlt. Dies soll zum Ausdruck bringen, dass das Abkühlen der weiteren Komponente 121 so weit geht, dass nicht nur eine betriebsbedingte Aufwärmung der weiteren Komponente 121 aufgrund derjenigen Verluste, die beim regulären Betrieb der weiteren Komponente 121 entstehen, kompensiert wird bzw. dass die entsprechende Wärme abgeführt wird. Über ein solches einfaches Kühlen hinausgehend wird die weitere Komponente 121 auf ein Temperaturniveau herabgekühlt, welches unterhalb der Normaltemperatur liegt. Unter der Normaltemperatur ist dabei diejenige Temperatur zu verstehen, die die weitere Komponente 121 hätte, wenn das System 1 bzw. die elektrische Maschine 100 nicht im Betrieb wäre, d.h. die Normaltemperatur ist bspw. die Umgebungs- bzw. Raumtemperatur des Umfelds, in dem sich die elektrische Maschine 100 befindet. Auch kann zur Definition der Normaltemperatur davon ausgegangen werden, dass die weitere Komponente 121, sobald die elektrische Maschine 100 betrieben wird, eine Temperatur aufweisen wird, die über der Normaltemperatur liegt.

Es wird demnach die Aufwärmenthalphie sowie ggf. ein verbleibender Teil der Verdampfungsenthalpie zur Abkühlung der weiteren Komponente 121 genutzt. Dabei sollen jedoch wie soeben beschrieben nicht nur die betriebsbedingten Verluste der weiteren Komponente 121 abgeführt werden, sondern es soll der Effekt genutzt werden, dass der elektrische Widerstand der weiteren Komponente 121 mit sinkender Temperatur abnimmt und damit bspw. die I²·R-Verluste ebenfalls. Dabei stellt I den elektrischen Strom durch die Komponente 121 sowie R den elektrischen Widerstand der Komponente 121 dar. Es ist also anzustreben, dass auch die Temperatur der weiteren Komponente 121 möglichst niedrig ist. Dabei kann davon ausgegangen werden, dass das Kühlmittel 10 eine Abkühlung der weiteren Komponente 121 auf ein tieferes Temperaturniveau unter der Normaltemperatur bewirkt, so dass die Höhe der betriebsbedingten Verluste noch einmal reduziert wird, was wiederum die Kühlung erleichtert.

Das Kühl- bzw. Betriebsmittel 10 wird nach Durchlaufen des zweiten Kühlsystem 150 und Abkühlen der weiteren Komponente 121 über einen weiteren Abschnitt 133 des Leitungssystems 130 in weiterhin gasförmigem Zustand aus der elektrischen Maschine 100 und zum Verbraucher 200 geleitet. Je nach Ausbildung des Verbrauchers 200 als Brennstoffzelle, Turbine etc. wird das Betriebsmittel 10 durch den Verbraucher 200 wie bereits beschrieben umgesetzt bzw. verarbeitet. Vorteilhafterweise befindet sich das Betriebsmittel 10 beim Erreichen des Verbrauchers 200 auf einer zum Betreiben des Verbrauchers 200 geeigneten Temperatur.

Das Kühlmittel 10 wird erst dann aus der elektrischen Maschine 100 und insbesondere aus dem zweiten Kühlsystem 150 abgeführt, wenn die Temperatur des Kühlmittels 10 einen ersten vorgegebenen Mindestwert überschreitet. Alternativ könnte auch die Temperatur der weiteren Komponente 121 überwacht werden. Dieser erste Mindestwert kann bspw. basierend auf der angestrebten Betriebstemperatur der weiteren Komponente 121 vorgegeben werden. Der erste Mindestwert kann also derart vorgegeben werden, dass gewährleistet werden kann, dass die weitere Komponente 121 unterhalb der Normaltemperatur betrieben wird. Eine zusätzliche oder alternative Bedingung für das Abführen des Kühlmittels 10 aus der elektrischen Maschine besteht darin, dass das Kühlmittel 10 erst dann als Betriebsmittel 10 dem Verbraucher 200 zugeführt wird, wenn eine Temperatur des Kühlmittels 10 einen zweiten vorgegebenen Mindestwert überschritten hat. Dieser zweite Mindestwert kann sich an den optimalen Betriebsbedingungen des Verbrauchers 200 orientieren. Die aktuelle Temperatur des Kühlmittels 10 kann bspw. durch einen Temperatursensor 151 des zweiten Kühlsystems 150 ermittelt werden.

Erster und zweiter Mindestwert können zwar identisch sein, typischerweise wird aber der erste Mindestwert derart vorgegeben sein, dass das Kühlmittel 10 abgeführt wird, sobald seine Temperatur so hoch und damit seine Kühlwirkung so gering ist, dass ein weiteres Abkühlen der weiteren Komponente 121 nicht mehr gewährleistet ist. Der zweite Mindestwert wird idealerweise so hoch liegen, dass die Temperatur des Kühlmittels 10 bzw. des Betriebsmittels 10 für den Verbraucher 200 im für den Betrieb des Verbrauchers 200 optimalen Bereich liegt.

Rein exemplarisch wird im Folgenden ein denkbarer Anwendungsfall für ein System 1 beschreiben, welches in diesem Anwendungsfall in einem elektrisch oder hybrid-elektrisch angetriebenen Flugzeug installiert ist. Das System 1 an Bord dieses Flugzeuges soll eine als Generator arbeitende elektrische Maschine 100 mit einem Rotor 110 mit supraleitfähigen Permanentmagneten 111 und mit einem Stator 120 mit Statorwicklungssystem 121 sowie eine Brennstoffzelle 200 aufweisen. Es kann davon ausgegangen werden, dass zur Erzeugung elektrischer Energie die Brennstoffzelle 200 mit 200kW elektrischer Leistung eingesetzt wird. Diese Brennstoffzelle 200 wird aus dem flüssigen Wasserstoff 10 enthaltenden Reservoir 20 mit Brennstoff bzw. Betriebsmittel 10 versorgt. Aus dem dazu notwendigen Wasserstoffdurchsatz errechnet sich eine Verdampfungsleistung von ca. 1,9kW bei der Siedetemperatur des Wasserstoffs 10. Zusätzlich stehen noch ca. 12kW Kälteleistung zur Verfügung, die bei der Aufwärmung des Kühl- bzw. Betriebsmittels 10 auf Raumtemperatur verfügbar werden. Zur Kühlung des Rotors 110 bzw. der Permanentmagnete 111 wird ein Teil der erwähnten Verdampfungsleistung, also der Verdampfungsenthalpie eingesetzt. Die verbleibende Kühlleistung aus der Verdampfung, d.h. der eventuell vorhandene Rest der Verdampfungsenthalpie, sowie die Aufwärmenthalpie sollen nun zur Kühlung des Stators 120 bzw. des Statorwicklungssystems 121 eingesetzt werden. Für die Gesamtverluste beim Betrieb der elektrischen Maschine 100 werden nach aktuellen Abschätzungen ca. 200kW angenommen, was sich im Wesentlichen auf die ohmschen Verluste des Stators 120 und des Wicklungssystems 121 zurückführen lässt. Wenn nun die nach der Kühlung des Rotors 110 und der Permanentmagnete 111 ggf. noch verbleibende Verdampfungskühlleistung und die Aufwärmenthalpie dazu verwendet werden, um das Statorwicklungssystem 121 auf eine Temperatur von bspw. ca. 60K abzukühlen und idealerweise auch dort zu halten, dann sinkt der Widerstand der für eine Statorwicklung 121 typischerweise verwendeten Kupferqualitäten gegenüber dem Widerstand bei der sonst üblichen Statorbetriebstemperatur von bis zu 150°C um mehr als einen Faktor 20. Die I²·R-Verluste nehmen daher um den gleichen Faktor ab und gehen damit auf ca. 10kW zurück. Dies kann durch die zur Verfügung stehende kryogene Kühlleistung abgedeckt werden. Dieses Rechenbeispiel ist natürlich rein exemplarisch zu verstehen. Konkrete Werte können hiervon abweichen.

Werden noch tiefere Temperaturen angestrebt, so kann bspw. durch den Einsatz hochreiner Kupferqualitäten für die Statorwicklung 121 deren ohmscher Widerstand weiter reduziert werden. Allerdings ist dabei zu beachten, dass mit sinkender Statortemperatur auch der zur Statorkühlung nutzbare Anteil der Aufwärmenthalpie der Kühlmittels 10 sinkt.

Insbesondere, aber nicht ausschließlich, in der speziellen Verwendung des Systems 1 in einem Flugzeug stellt es sich als vorteilhaft heraus, wenn das Abkühlen zumindest der weiteren Komponente 121 vor einer Inbetriebnahme der elektrischen Maschine 100 erfolgt, insbesondere vor dem Starten des Flugzeuges. Hiermit wird erreicht, dass die Temperatur der weiteren Komponente 121 zum Zeitpunkt des Startens des elektrischen Flugzeugs bereits möglichst niedrig ist und insbesondere unter der Normaltemperatur liegt, so dass kurzzeitig eine Überlastung der elektrischen Maschine 100 bspw. für den Start des Flugzeugs ermöglicht wird. In diesem Beispiel geht die Inbetriebnahme der elektrischen Maschine 100 einher mit der Aktivierung eines Antriebssystems des Flugzeugs zur Schuberzeugung.

Es sei angemerkt, dass oben zwar regelmäßig von "einer Rotorwicklung" bzw. "einer Statorwicklung" bzw. von entsprechenden Wicklungssystemen die Rede ist, dass dies aber nicht derart einschränkend zu verstehen ist, dass Rotor bzw. Stator tatsächlich jeweils nur eine einzige derartige Wicklung aufweisen. Natürlich können Rotor und/oder Stator jeweils mehrere solcher Wicklungen umfassen.

Das Zu- und Abführen des Kühl- bzw. Betriebsmittels 10 von und zu verschiedenen Komponenten und Bestandteilen 20, 100, 110, 120, 140, 150, 200 des Systems 1 wird mittels einer Steuereinheit 300 und vorzugsweise basierend auf an verschiedenen Orten des Systems 1 vorherrschenden Temperaturen realisiert. Hierfür werden Sensoren 141, 151 verwendet, die bspw. im ersten 140 und zweiten Kühlsystem 150 angeordnet sind, um die dort vorherrschenden Temperaturen zu ermitteln. Weiterhin können Sensoren 112, 122 vorgesehen sein, die die Temperaturen der Komponenten 111, 121 messen und an die Steuereinheit 300 übermitteln. In Abhängigkeit von den diversen Temperaturen beeinflusst die Steuereinheit 300 den Fluss des Kühl- bzw. Betriebsmittels 10 bspw. mit Hilfe von (nicht dargestellten) Pumpen und/oder Ventilen. Hierzu können bspw. die oben eingeführten ersten und zweiten Mindestwerte in der Steuereinheit 300 hinterlegt sein.

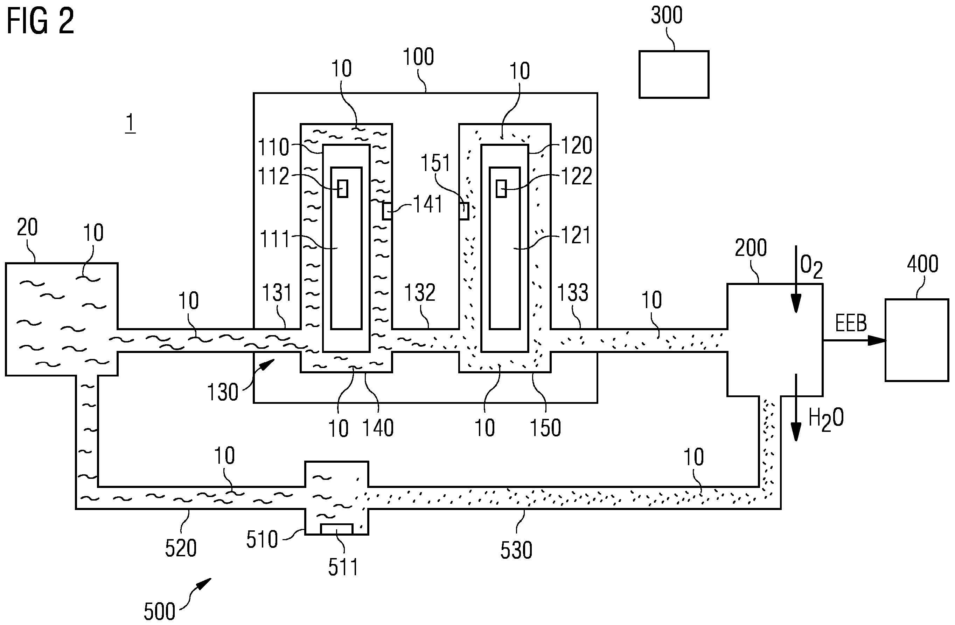

Es ist anzunehmen, dass sich in der Realität im Betrieb des Systems 1 ein zeitlich variierender Leistungsbedarf an die Brennstoffzelle 200 ergibt, womit auch der Bedarf der Brennstoffzelle 200 an Betriebsmittel 10 variiert. Entsprechend des Bedarfs der Brennstoffzelle 200 wird folglich die verfügbare Kälteleistung des Kühlmittels 10 aus dem zweiten Kühlsystem 150 variieren, was abhängig von der Höhe der elektrischen Verluste im Stator 120 zu Temperaturänderungen im Stator 120 führt, da ggf. Kühlmittel 10 frühzeitig aus dem zweiten Kühlsystem 150 abgezogen wird, um den erhöhten Bedarf der Brennstoffzelle 200 zu decken. Da der Stator 120 jedoch aufgrund seiner Beschaffenheit über eine vergleichsweise große Wärmekapazität verfügt, können zeitlich auftretende Unterschiede zwischen verfügbarer Kälteleistung und im Stator 120 benötigter Kälteleistung in gewissem Umfang in der großen Wärmekapazität der Statorwicklung 121 gepuffert werden. Die FIG 2 zeigt eine erste Variante einer ersten Ausführungsform des Systems 1. In dieser Variante wird insbesondere der Situation Rechnung getragen, dass Rotor 110 und Stator 120 zu beliebigen Zeitpunkten einen unterschiedlichen Bedarf an Kühlung haben können. Insbesondere den Rotor 110 wird man stets aus den weiter oben genannten Gründen auf nahezu konstanter, kryogener Temperatur halten wollen, was dazu führt, dass die durch den Rotor 110 erreichbare Verdampfungsrate im Wesentlichen fest ist, dass also die pro Zeiteinheit vom Rotor 110 bereitgestellte und dem zweiten Kühlsystem 150 zuführbare Menge an gasförmigen Kühl- bzw. Betriebsmittel 10 im Wesentlichen konstant ist. Je nach momentaner Belastung der Brennstoffzelle 200 kann diese jedoch ggf. einen Volumenstrom an Betriebsmittel 10 benötigen, der über den vom Rotor 110 bereitgestellten, konstanten Fluss an Kühlmittel 10, welcher von der Verdampfungsrate am Rotor 110 abhängt, hinaus geht. Um in einer derartigen Situation eine ausreichende Versorgung der Brennstoffzelle 200 mit Betriebsmittel 10 zu gewährleisten, ist in der ersten Ausführungsform ein Bypass 500 mit eine Heizeinrichtung 510 vorgesehen, die in die elektrische Maschine 100 integriert sein kann, die in FIG 2 aber separat dargestellt ist. Vom Reservoir 20 führt eine zusätzliche Leitung 520 zur Heizeinrichtung 510, über die flüssiges Kühl- bzw. Betriebsmittel 10 aus dem Reservoir 20 zur Heizeinrichtung 510 transportiert werden kann. Die Heizeinrichtung 510 heizt das Kühl- bzw. Betriebsmittel 10 soweit auf, dass es die für die Verwendung in der Brennstoffzelle 200 geeignete Temperatur aufweist. Das so aufgeheizte und nunmehr gasförmige Kühl- bzw. Betriebsmittel 10 wird über eine Leitung 530 zur Brennstoffzelle 200 geführt, um dort wie oben beschrieben umgesetzt zu werden.

Das Aufheizen in der Heizeinrichtung 510 kann bspw. mittels einer elektrischen Heizung 511 erfolgen. Alternativ zur elektrischen Heizung 511 kann die Heizeinrichtung 510, insbesondere wenn er in die elektrische Maschine 100 integriert ist, Wärme vom Stator 120 verwenden, um das Kühl- bzw. Betriebsmittel 10 aufzuheizen. Hierzu ist die Heizeinrichtung 510 derart in der Maschine 100 angeordnet, dass er in thermischem Kontakt mit dem Stator 120 ist, so dass Wärme vom Stator auf die Heizeinrichtung 510 übergehen kann.

Der beschriebene Bypass 500 stellt eine Umgehung insbesondere des Rotors 110 dar, über die Kühl- bzw. Betriebsmittel 10 direkt der Brennstoffzelle 200 zugeführt werden kann, um eine Unabhängigkeit des Systems 1 von der konstanten Verdampfungsrate des Rotors 110 zu erreichen, so dass bspw. auf momentane Variationen des Bedarfs der Brennstoffzelle 200 an Betriebsmittel 10 reagiert werden kann.

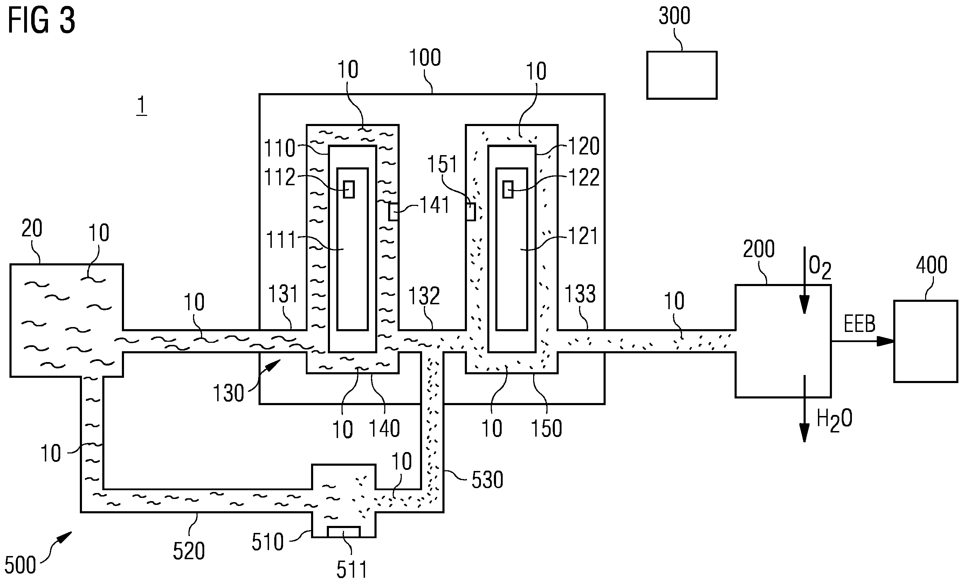

In einer zweiten Variante der ersten Ausführungsform, die in der FIG 3 dargestellt ist, ist die Leitung 530 nicht direkt mit der Brennstoffzelle 200, sondern mit dem Leitungsabschnitt 132 oder direkt mit dem zweiten Kühlsystem 150 verbunden. In dieser Konstellation kann das zweite Kühlsystem 150 die im Kühl- bzw. Betriebsmittel 10 nach Aufwärmung in der Heizeinrichtung 510 ggf. noch zur Verfügung stehende Kälteleitung zur Kühlung des Stators 120 nutzen.

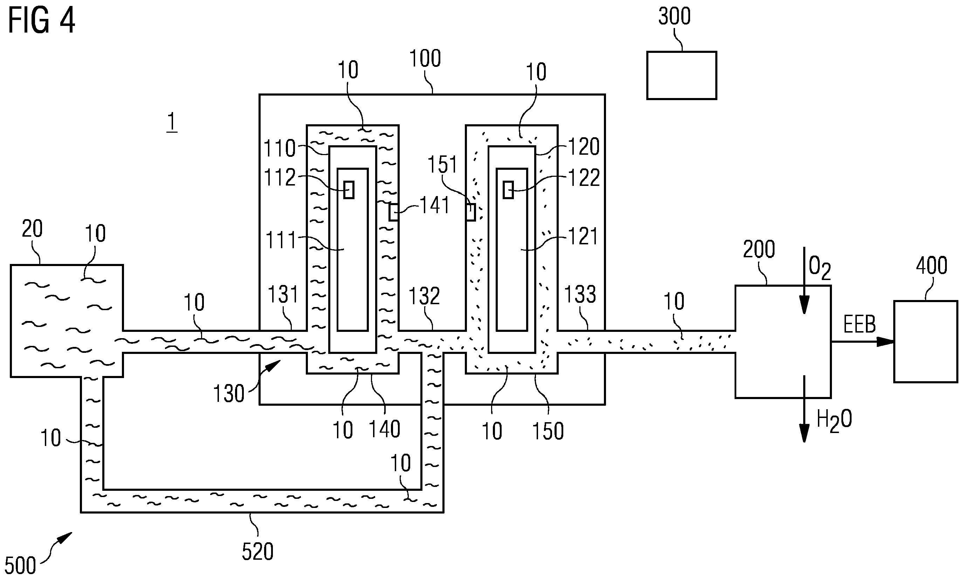

Eine dritte Variante der ersten Ausführungsform, die in der FIG 4 dargestellt ist, geht davon aus, dass das Kühl- bzw. Betriebsmittel 10 allein im zweiten Kühlsystem 150 auf eine Temperatur bringbar ist, die für eine Verwendung in der Brennstoffzelle 200 geeignet ist. Dementsprechend weist der Bypass 500 lediglich die Leitung 520 auf, während auf die separate Heizeinrichtung 510 und konsequenterweise auf die Leitung 530 verzichtet wird. Das Kühl- bzw. Betriebsmittel 10 wird wie in der zweiten Variante dem Leitungsabschnitt 132 oder direkt dem zweiten Kühlsystem 150 zugeführt. Das zweite Kühlsystem 150 bzw. der Stator 120 übernimmt in dieser Variante also die Funktion der Heizeinrichtung 510, d.h. formal ist auch in dieser Variante ein heizendes Element vorhanden, nämlich der Stator 120 bzw. die Statorwicklung 121.

Das in der ersten Ausführungsform beschriebene System baut darauf auf, dass zum Einen der Rotor 110 wie beschrieben eine feste Verdampfungsrate hat, während zum Anderen der Bedarf der Brennstoffzelle 200 an Betriebsmittel 10 variieren kann. Der Stator 120 ist dagegen eine flexible Komponente, die keinen konkreten Bedarf an Kühl- bzw. Betriebsmittel 10 hat und die auch ohne eine Minimalversorgung betreibbar ist. Für den Stator 120 gilt lediglich, dass eine möglichst niedrige Temperatur vorteilhaft ist, dass aber kurzzeitige höhere Temperaturen kompensierbar bzw. akzeptabel sind. Dementsprechend setzen die Varianten der ersten Ausführungsform den Bypass 500 ein, der den Rotor 110 fluidisch umgeht und das Kühl- bzw. Betriebsmittel 10 je nach Variante an verschiedenen Punkten und mit oder ohne Vorverdampfer 510 zur Verfügung stellt, so dass ein ggf. höherer Bedarf der Brennstoffzelle 200 an Betriebsmittel 10 bedient werden kann.

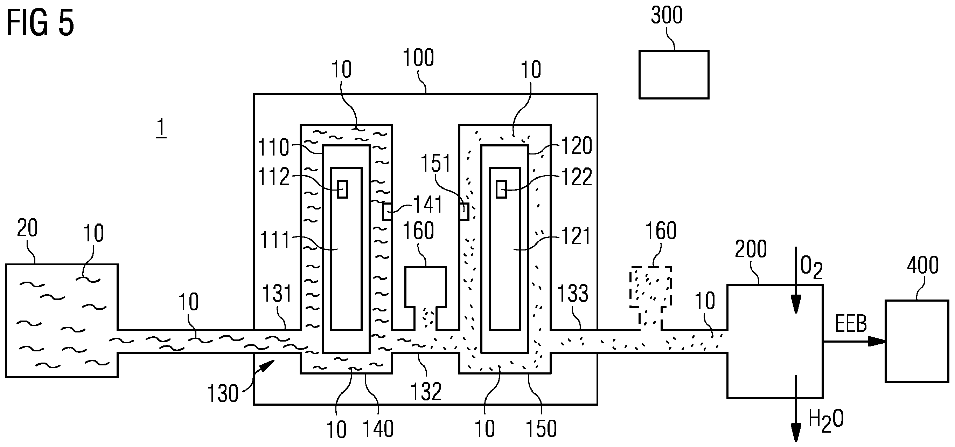

In einer zweiten Ausführungsform, die in der FIG 5 dargestellt ist und die die gleiche Problematik wie die erste Ausführungsform adressiert, ist zwischen Rotor 110 und Stator 120 ein Speicher 160 für Kühl- bzw. Betriebsmittel 10 vorgesehen. Der Speicher 160 kann alternativ auch zwischen Stator 120 und Brennstoffzelle 200 angeordnet sein, was den Vorteil hat, dass das im Speicher 160 zwischengespeicherte Kühl- bzw. Betriebsmittel 10 bereits eine höhere Temperatur aufweist, die nahe bei der für die Brennstoffzelle 200 geeigneten Temperatur des Betriebsmittels 10 liegt. Diese Alternative ist in FIG 3 mit gestrichelten Linien dargestellt. Für den Fall, dass die Brennstoffzelle 200 weniger Betriebsmittel 10 benötigt, als vom Rotor 110 bereitgestellt wird, kann dieses überschüssige Betriebsmittel 10 im Speicher 160 zwischengespeichert werden. Sobald der Bedarf der Brennstoffzelle 200 an Betriebsmittel 10 die von dem Rotor 110 bereitgestellte Menge übersteigt, kann zwischengespeichertes Betriebsmittel aus dem Speicher 160 abgerufen werden.

Natürlich können die erste und die zweite Ausführungsform miteinander kombiniert werden, d.h. ein entsprechendes System 1 würde sowohl den Vorverdampfer 500 mit den entsprechenden Leitungen 510, 520 als auch den Speicher 160 aufweisen. Die Steuerung bzw. Regelung des Systems einschließlich der Flüsse von Kühl- bzw. Betriebsmittel 10 wird in sämtlichen Ausführungsformen von der Steuerung 300 geleistet.

Wie bereits erwähnt kann die erste, kryogene Komponente 111 der Maschine 100 alternativ zur Ausbildung als supraleitfähiger Permanentmagnet auch als supraleitfähiges RotorWicklungssystem ausgebildet sein. Ebenso ist es denkbar, dass die erste, kryogene Komponente 111 nicht Bestandteil des Rotors 110 ist, sondern des Stators 120. In diesem Fall würde bspw. die Statorwicklung 121 die erste, kryogene Komponente repräsentieren, während die weitere Komponente durch die Permanentmagnete 111 oder aber durch das genannte Rotorwicklungssystem realisiert ist.

Der kryogene Bestandteil des Systems 1 war in der oben beschriebenen Ausführung eine kryogene elektrische Maschine 100, insbesondere deren Rotor 110 bzw. dessen Rotorwicklung 111. Das entsprechende Konzept kann jedoch bspw. auch für einen Trafo oder einen Strombegrenzer etc. eingesetzt werden.

## Patentansprüche

1. Verfahren zum Betreiben eines Systems (1), welches aufweist:
- eine kryogene, insbesondere supraleitfähige, elektrische Maschine (100) mit einer Vielzahl von Komponenten (111, 121), umfassend zumindest eine kryogene Komponente (111) und ein der kryogenen Komponente (111) zugeordnetes erstes Kühlsystem (140) und zumindest eine weitere Komponente (121) und ein der weiteren Komponente (121) zugeordnetes zweites Kühlsystem (150), und
- einen Verbraucher (200), welcher ausgebildet ist, um ein Betriebsmittel (10) umzusetzen,
wobei
- ein kryogenes Kühlmittel (10) aus einem Reservoir (20) in flüssigem Zustand dem ersten Kühlsystem (140) und der kryogenen Komponente (111) der elektrischen Maschine (100) zugeführt wird, um die kryogene Komponente (111) auf eine kryogene Temperatur zu kühlen, wobei zumindest ein Teil des Kühlmittels (10) verdampft,
- das Kühlmittel (10) anschließend gänzlich oder zumindest überwiegend in gasförmigem Zustand dem zweiten Kühlsystem (150) und der weiteren Komponente (121) der elektrischen Maschine (100) zugeführt wird, um die weitere Komponente (121) unter Ausnutzung einer verbleibenden Kühlleistung des Kühlmittels (10) insbesondere auf eine gegenüber einer Normaltemperatur verminderte Betriebstemperatur abzukühlen, und
- das Kühlmittel (10) anschließend von der elektrischen Maschine (100) dem Verbraucher (200) zur Verfügung gestellt wird, wobei der Verbraucher (200) das ihm zugeführte Kühlmittel (10) als Betriebsmittel (10) verwendet
**dadurch gekennzeichnet, dass**
dem Verbraucher (200) zusätzlich Betriebsmittel (10) zugeführt wird, wobei zur Bereitstellung des zusätzlichen Betriebsmittels (10)
- zusätzliches Kühlmittel (10) dem Reservoir (20) entnommen wird,
- das entnommene zusätzliche Kühlmittel (10) einem Bypass (500) zugeführt wird, welcher eine Umgehung der kryogenen Komponente (111) und des ersten Kühlsystems (140) darstellt, wobei der Bypass (500) einen Heizeinrichtung (510, 150) aufweist, wobei die Heizeinrichtung (510, 150) eine separate Einrichtung (510) und/oder das zweite Kühlsystem (150) ist, wobei der Heizeinrichtung (510, 150) das entnommene zusätzliche Kühlmittel (10) zugeführt wird und die das ihr zugeführte Kühlmittel (10) aufwärmt, und
- das aufgewärmte Kühlmittel (10) als zusätzliches Betriebsmittel (10) dem Verbraucher (200) zur Verfügung gestellt wird.

2. Verfahren nach Anspruch 1, **dadurch gekennzeichnet, dass**
- das Kühlen der kryogenen Komponente (111) unter Ausnutzung zumindest eines Teils der Verdampfungsenthalpie des flüssigen Kühlmittels (10) erfolgt und
- das Abkühlen der weiteren Komponente (121) unter Ausnutzung zumindest eines Teils der Aufwärmenthalpie des Kühlmittels (10) erfolgt.

3. Verfahren nach einem der Ansprüche 1 bis 2, **dadurch gekennzeichnet, dass** überschüssiges, in der kryogenen Komponente (111) verdampftes Kühlmittel (10) einem Speicher (160) zugeführt und dort zwischengespeichert wird, wobei zumindest für den Fall, dass ein Bedarf des Verbrauchers (200) an Betriebsmittel (10) eine von der elektrischen Maschine (100) zur Verfügung gestellte Menge an Betriebsmittel (10) übersteigt, zumindest ein Teil des in dem Speicher (160) zwischengespeicherten Kühlmittels (10) als zusätzliches Betriebsmittel (10) dem Verbraucher (200) zugeführt wird.

4. System, aufweisend
- eine kryogene, insbesondere supraleitfähige, elektrische Maschine (100) mit einer Vielzahl von Komponenten (111, 121) und mit einem Leitungssystem (130) zum Leiten eines Kühlmittels (10) zu den und zwischen den Komponenten (111, 121), sowie
- einen Verbraucher (200), welcher ausgebildet ist, um ein Betriebsmittel (10) umzusetzen,
wobei die Vielzahl von Komponenten (111, 121) umfasst:
- zumindest eine kryogene Komponente (111) und ein der kryogenen Komponente (111) zugeordnetes erstes Kühlsystem (140), welchem das Kühlmittel (10) in flüssigem Zustand über einen ersten Abschnitt (131) des Leitungssystems (130) zuführbar ist, um die kryogene Komponente (111) unter Ausnutzung zumindest eines Teils der Verdampfungsenthalpie des flüssigen Kühlmittels (10) auf eine kryogene Temperatur zu kühlen,
- zumindest eine weitere Komponente (121) und ein der weiteren Komponente (121) zugeordnetes zweites Kühlsystem (150), welchem das Kühlmittel (10) von dem ersten Kühlsystem (140) über einen weiteren Abschnitt (132) des Leitungssystems (130) zuführbar ist, um die weitere Komponente (121) unter Ausnutzung einer verbleibenden Kühlleistung des Kühlmittels (10) und unter Ausnutzung zumindest eines Teils der Aufwärmenthalpie des Kühlmittels (10) auf eine gegenüber einer Normaltemperatur verminderte Betriebstemperatur abzukühlen, und wobei
- das Betriebsmittel (10) des Verbrauchers (200) das Kühlmittel (10) ist und
- der Verbraucher (200) und die elektrische Maschine (100) derart fluidisch miteinander verbunden sind, dass das Kühlmittel (10) nach Durchlaufen der elektrischen Maschine (100) dem Verbraucher (200) im gasförmigen Zustand zuführbar ist, um dort umgesetzt zu werden
wobei
- ein Reservoir (20) zum Speichern und Bereitstellen des Kühlmittels (10) in flüssigem Zustand vorgesehen ist, wobei das Reservoir (20) derart fluidisch oder thermisch mit der elektrischen Maschine (100) verbunden ist, dass das Kühlmittel (10) dem ersten Abschnitt (131) des Leitungssystems (130) und darüber der kryogenen Komponente (111) zuführbar ist,
**dadurch gekennzeichnet, dass**
- ein Bypass (500) vorgesehen ist, der das Reservoir (20) und den Verbraucher (200) unter Umgehung der kryogenen Komponente (111) und des ersten Kühlsystems (140) fluidisch miteinander verbindet, wobei der Bypass (500) eine Heizeinrichtung (510, 150) aufweist, wobei die Heizeinrichtung (510, 150) eine separate Einrichtung (510) und/oder das zweite Kühlsystem (150) ist, wobei mit der Heizeinrichtung (510, 150) das dem Bypass (500) zugeführte Kühlmittel (10) aufwärmbar ist.

5. System nach Anspruch 4, **dadurch gekennzeichnet, dass** die kryogene Komponente (111) ein Rotor (110) der elektrischen Maschine (100) ist, insbesondere eine kryogene Rotorwicklung (111) oder ein supraleitender Permanentmagnet.

6. System nach Anspruch 5, **dadurch gekennzeichnet, dass** der Rotor (110) in oder an einem das flüssige Kühlmittel (10) aufweisenden Bad (140) gekühlt wird.

7. System nach einem der Ansprüche 4 bis 6, **dadurch gekennzeichnet, dass** die weitere Komponente (121) eine normalleitende Komponente ist.

8. System nach einem der Ansprüche 4 bis 7, **dadurch gekennzeichnet, dass** die weitere Komponente (121) ein Stator (120) der elektrischen Maschine (100) ist, insbesondere eine Statorwicklung (121).

9. System nach einem der Ansprüche 4 bis 8, **dadurch gekennzeichnet, dass** der Bypass (500) das Reservoir (20) und den Verbraucher (200) unter Umgehung der weiteren Komponente (121) und des zweiten Kühlsystems (150) fluidisch miteinander verbindet.

10. System nach einem der Ansprüche 4 bis 8, **dadurch gekennzeichnet, dass** der Bypass (500) das Reservoir (20) und das zweite Kühlsystem (150) zum Kühlen der weiteren Komponente (121) fluidisch miteinander verbindet.

11. System nach Anspruch 10, **dadurch gekennzeichnet, dass**
- die Heizeinrichtung (510) eine separate Einrichtung (510) des Bypasses (500) zum Aufwärmen des Kühlmittels (10) ist oder
- das zweite Kühlsystem (150) die Heizeinrichtung (510) darstellt.

12. System nach einem der Ansprüche 5 bis 11, **dadurch gekennzeichnet, dass** ein Speicher (160) vorgesehen ist, dem zumindest überschüssiges, in der kryogenen Komponente (111) verdampftes Kühlmittel (10) zuführbar und dort zwischenspeicherbar ist.

## Claims

1. Method for operating a system (1) which has:
- a cryogenic, in particular superconductive, electric machine (100) with a multiplicity of components (111, 121), comprising at least one cryogenic component (111) and a first cooling system (140) which is assigned to the cryogenic component (111), and at least one further component (121) and a second cooling system (150) which is assigned to the further component (121), and
- a consumer (200) which is configured to convert an operating medium (10),
wherein
- a cryogenic coolant (10) is fed out of a reservoir (20) in a liquid state to the first cooling system (140) and the cryogenic component (111) of the electric machine (100), in order to cool the cryogenic component (111) to a cryogenic temperature, wherein at least part of the coolant (10) evaporates,
- the coolant is subsequently fed completely or at least predominantly in a gaseous state to the second cooling system (150) and the further component (121) of the electric machine (100), in order to cool the further component (121), in particular, to an operating temperature which is lowered in comparison with a normal temperature, with utilization of a remaining cooling capability of the coolant (10), and
- the coolant (10) is subsequently provided by the electric machine (100) to the consumer (200), wherein the consumer (200) uses the coolant (10) which is fed to it as operating medium (10),
**characterized in that** operating medium (10) is additionally fed to the consumer (200), wherein, in order to provide an additional operating medium (10),
- additional coolant (10) is removed from the reservoir (20),
- the removed additional coolant (10) is fed to a bypass (500) which provides bypassing of the cryogenic component (111) and the first cooling system (140), wherein the bypass (500) has a heating device (510, 150), wherein the heating device (510, 150) is a separate device (510) and/or the second cooling system (150), wherein the removed additional coolant (10) is fed to the heating device (510, 150) and heats the coolant (10) which is fed to it, and
- the heated coolant (10) is provided as an additional operating medium (10) to the consumer (200).

2. Method according to Claim 1, **characterized in that**
- the cooling of the cryogenic component (111) takes place with utilization of at least part of the evaporation enthalpy of the liquid coolant (10), and
- the cooling of the further component (121) takes place with utilization of at least part of the heating enthalpy of the coolant (10).

3. Method according to either of Claims 1 and 2, **characterized in that** excess coolant (10) which has evaporated in the cryogenic component (111) is fed to a store (160) and is buffer-stored there, wherein, at least for the case where a requirement of the consumer (200) of operating medium (10) exceeds a quantity of operating medium (10) which is made available by the electric machine (100), at least part of the coolant (10) which is buffer-stored in the store (160) is fed as additional operating medium (10) to the consumer (200).

4. System, having
- a cryogenic, in particular superconductive, electric machine (100) with a multiplicity of components (111, 121) and with a line system (130) for conducting a coolant (10) to and between the components (111, 121), and
- a consumer (200) which is configured to convert an operating medium (10),
wherein the multiplicity of components (111, 121) comprises:
- at least one cryogenic component (111) and a first cooling system (140) which is assigned to the cryogenic component (111) and to which the coolant (10) can be fed in a liquid state via a first section (131) of the line system (130), in order to cool the cryogenic component (111) to a cryogenic temperature with utilization of at least part of the evaporation enthalpy of the liquid coolant (10),
- at least one further component (121) and a second cooling system (150) which is assigned to the further component (121) and to which the coolant (10) cam be fed from the first cooling system (140) via a further section (132) of the line system (130), in order to cool the further component (121) to an operating temperature which is lowered with respect to a normal temperature with utilization of a remaining cooling capability of the coolant (10) and with utilization of at least part of the heating enthalpy of the coolant (10),
and wherein
- the operating medium (10) of the consumer (200) is the coolant (10), and
- the consumer (200) and the electric machine (100) are connected to one another fluidically in such a way that, after running through the electric machine (100), the cooling medium (10) can be fed in the gaseous state to the consumer (200), in order to be converted there,
wherein
- a reservoir (20) is provided for storing and providing the coolant (10) in a liquid state, wherein the reservoir (20) is connected to the electric machine (100) fluidically or thermally in such a way that the coolant (10) can be fed to the first section (131) of the line system (130) and, via this, to the cryogenic component (111),
**characterized in that**
- a bypass (500) is provided which connects the reservoir (20) and the consumer (200) to one another fluidically with bypassing of the cryogenic component (111) and the first cooling system (140), wherein the bypass (500) has a heating device (510, 150), wherein the heating device (510, 150) is a separate device (510) and/or the second cooling system (150), wherein the coolant (10) which is fed to the bypass (500) can be heated by way of the heating device (510, 150).

5. System according to Claim 4, **characterized in that** the cryogenic component (111) is a rotor (110) of the electric machine (100), in particular a cryogenic rotor winding (111) or a superconducting permanent magnet.

6. System according to Claim 5, **characterized in that** the rotor (110) is cooled in or on a bath (140) which has the liquid coolant (10).

7. System according to one of Claims 4 to 6, **characterized in that** the further component (121) is a normally conducting component.

8. System according to one of Claims 4 to 7, **characterized in that** the further component (121) is a stator (120) of the electric machine (100), in particular a stator winding (121).

9. System according to one of Claims 4 to 8, **characterized in that** the bypass (500) connects the reservoir (20) and the consumer (200) to one another fluidically with bypassing of the further component (121) and the second cooling system (150).

10. System according to Claim one of Claims 4 to 8, **characterized in that** the bypass (500) connects the reservoir (20) and the second cooling system (150) for cooling the further component (121) to one another fluidically.

11. System according to Claim 10, **characterized in that**
- the heating device (510) is a separate device (510) of the bypass (500) for heating the coolant (10), or
- the second cooling system (150) is the heating device (510).

12. System according to one of Claims 5 to 11, **characterized in that** a store (160) is provided, to which at least excess coolant (10) which has evaporated in the cryogenic component (111) can be fed and buffer-stored in the said store (160).

## Revendications

1. Procédé d'exploitation d'un système (1), présentant :
- une machine électrique (100) cryogène, en particulier supraconductrice, dotée d'une pluralité de composants (111, 121) comprenant au moins un composant cryogène (111) et un premier système de refroidissement (140) attribué au composant cryogène (111) et au moins un composant supplémentaire (121) et un deuxième système de refroidissement (150) attribué au composant supplémentaire (121), et
- un consommateur (200) qui est réalisé pour transformer un fluide fonctionnel (10),
dans lequel
- un agent réfrigérant cryogène (10) est amené depuis un réservoir (20) à l'état liquide jusqu'au premier système de refroidissement (140) et au composant cryogène (111) de la machine électrique (100) afin de refroidir le composant cryogène (111) jusqu'à une température cryogène, dans lequel au moins une partie de l'agent réfrigérant (10) s'évapore,
- l'agent réfrigérant (10), complètement ou du moins principalement à l'état gazeux, est ensuite amené au deuxième système de refroidissement (150) et au composant supplémentaire (121) de la machine électrique (100) afin de refroidir le composant supplémentaire (121) en exploitant une puissance de refroidissement restante de l'agent réfrigérant (10), en particulier jusqu'à une température de service diminuée par rapport à une température normale, et
- l'agent réfrigérant (10) est ensuite mis à la disposition du consommateur (200) par la machine électrique (100), le consommateur (200) utilisant comme fluide fonctionnel (10) l'agent réfrigérant (10) qui lui est amené,
**caractérisé en ce qu'**un fluide fonctionnel (10) supplémentaire est amené au consommateur (200), dans lequel pour la fourniture du fluide fonctionnel supplémentaire (10)
- un agent réfrigérant supplémentaire (10) est prélevé sur le réservoir (20),
- l'agent réfrigérant supplémentaire (10) prélevé est amené à une dérivation (500) qui représente un contournement du composant cryogène (111) et du premier système de refroidissement (140), la dérivation (500) présentant un dispositif de chauffage (510, 150), le dispositif de chauffage (510, 150) étant un dispositif séparé (510) et/ou est le deuxième système de refroidissement (150), dans lequel l'agent réfrigérant supplémentaire (10) prélevé est amené au dispositif de chauffage (510, 150) et celui-ci réchauffe l'agent réfrigérant (10) qui lui est amené, et
- l'agent réfrigérant (10) réchauffé est mis à la disposition du consommateur (200) sous forme de fluide fonctionnel supplémentaire.

2. Procédé selon la revendication 1, **caractérisé en ce que**
- le refroidissement du composant cryogène (111) est effectué en exploitant au moins une partie de l'enthalpie d'évaporation de l'agent réfrigérant liquide (10), et
- le refroidissement du composant supplémentaire (121) est effectué en exploitant au moins une partie de l'enthalpie de réchauffement de l'agent réfrigérant (10) .

3. Procédé selon l'une quelconque des revendications 1 à 2, **caractérisé en ce que** l'agent réfrigérant (10) excédentaire, évaporé dans le composant cryogène (111), est amené à un accumulateur (160) et y est stocké temporairement, dans lequel, au moins au cas où une demande du consommateur (200) en fluide fonctionnel (10) dépasse une quantité de fluide fonctionnel (10) mise à disposition par la machine électrique (100), au moins une partie de l'agent réfrigérant (10) stocké temporairement dans l'accumulateur (160) est amenée au consommateur (200) sous forme de fluide fonctionnel supplémentaire (10).

4. Système, présentant
- une machine électrique (100) cryogène, en particulier supraconductrice, dotée d'une pluralité de composants (111, 121) et d'un système de conduites (130) pour conduire un agent réfrigérant (10) jusqu'aux et entre les composants (111, 121), et
- un consommateur (200) réalisé pour transformer un fluide fonctionnel (10),
la pluralité de composants (111, 121) comprenant :
- au moins un composant cryogène (111) et un premier système de refroidissement (140) attribué au composant cryogène (111) et auquel l'agent réfrigérant (10) à l'état liquide peut être amené en passant par une première partie (131) du système de conduites (130) afin de refroidir le composant cryogène (111) en exploitant au moins une partie de l'enthalpie d'évaporation de l'agent réfrigérant liquide (10) jusqu'à une température cryogène,
- au moins un composant supplémentaire (121) et un deuxième système de refroidissement (150) attribué au composant supplémentaire (121) et auquel l'agent réfrigérant (10) peut être amené depuis le premier système de refroidissement (140) en passant par une partie supplémentaire (132) du système de conduites (130) afin de refroidir le composant supplémentaire (121) en exploitant une puissance de refroidissement restante de l'agent réfrigérant (10) et en exploitant au moins une partie de l'enthalpie de réchauffement de l'agent réfrigérant (10) jusqu'à une température de service diminuée par rapport à une température normale,
et dans lequel
- le fluide fonctionnel (10) du consommateur (200) est l'agent réfrigérant (10), et
- le consommateur (200) et la machine électrique (100) sont reliés ensemble de manière fluidique de telle sorte que l'agent réfrigérant (10), après son passage par la machine électrique (100), peut être amené au consommateur (200) à l'état gazeux afin d'y être transformé,
dans lequel
- un réservoir (20) pour stocker et fournir l'agent réfrigérant (10) à l'état liquide est prévu, le réservoir (20) étant relié à la machine électrique (100) de manière fluidique ou thermique de telle sorte que l'agent réfrigérant (10) peut être amené à la première partie (131) du système de conduites (130) et par l'intermédiaire de celui-ci au composant cryogène (111),
**caractérisé en ce que**
- une dérivation (500) est prévue qui relie le réservoir (20) et le consommateur (200) de manière fluidique en contournant le composant cryogène (111) et le premier système de refroidissement (140), la dérivation (500) présentant un dispositif de chauffage (510, 150), le dispositif de chauffage (510, 150) étant un dispositif séparé (510) et/ou le deuxième système de refroidissement (150), le dispositif de chauffage (510, 150) permettant de réchauffer l'agent réfrigérant (10) amené à la dérivation (500).

5. Système selon la revendication 4, **caractérisé en ce que** le composant cryogène (111) est un rotor (110) de la machine électrique (100), en particulier un enroulement de rotor cryogène (111) ou un aimant permanent supraconducteur.

6. Système selon la revendication 5, **caractérisé en ce que** le rotor (110) est refroidi dans ou au niveau d'un bain (140) présentant l'agent réfrigérant liquide (10) .

7. Système selon l'une quelconque des revendications 4 à 6, **caractérisé en ce que** le composant supplémentaire (121) est un composant à conduction normale.

8. Système selon l'une quelconque des revendications 4 à 7, **caractérisé en ce que** le composant supplémentaire (121) est un stator (120) de la machine électrique (100) en particulier un enroulement de stator (121).

9. Système selon l'une quelconque des revendications 4 à 8, **caractérisé en ce que** la dérivation (500) relie le réservoir (20) et le consommateur (200) de manière fluidique en contournant le composant supplémentaire (121) et le deuxième système de refroidissement (150).

10. Système selon la revendication selon l'une quelconque des revendications 4 à 8, **caractérisé en ce que** la dérivation (500) relie le réservoir (20) et le deuxième système de refroidissement (150) de manière fluidique pour refroidir le composant supplémentaire (121) .

11. Système selon la revendication 10, **caractérisé en ce que**
- le dispositif de chauffage (510) est un dispositif séparé (510) de la dérivation (500) pour réchauffer l'agent réfrigérant (10), ou
- le deuxième système de refroidissement (150) représente le dispositif de chauffage (510).

12. Système selon l'une quelconque des revendications 5 à 11, **caractérisé en ce qu'**un accumulateur (160) est prévu auquel au moins un agent réfrigérant excédentaire (10), évaporé dans le composant cryogène (111), peut être amené et peut y être stocké temporairement.
